# EUROPEAN PATENT SPECIFICATION

(11) **EP 1 517 065 B1**
(45) Date of publication and mention of the grant of the patent: **06.06.2007**
(21) Application number: 04022443.8
(22) Date of filing: 21.09.2004
(51) Int. Cl.: F16H 7/08

(54) **Oil tight type chain tensioner**
Hydraulische Kettenspannvorrichtung
Tendeur de chaîne hydraulique

(30) Priority: 22.09.2003 JP 2003330136
(43) Date of publication of application: 23.03.2005
(73) Proprietor: Toyota Jidosha Kabushiki Kaisha, Toyota-shi, Aichi-ken, 471-8571 (JP); Tsubakimoto Chain Co., Osaka 530-0018, (JP)
(72) Inventor: Tomita, Yukiharu, Toyota-shi, Aichi-ken, 471-8571 (JP); Kano, Tomohiro, Toyota-shi, Aichi-ken, 471-8571 (JP); Nakakubo, Katsuya, Osaka, 530-0018 (JP); Yoshimura, Tomonori, Osaka, 530-0018 (JP); Hashimoto, Hiroshi, Osaka, 530-0018 (JP); Oohara, Hitoshi, Osaka, 530-0018 (JP)
(74) Representative: Kuhnen, Rainer-Andreas

(56) References cited:
- DE-A- 4 340 487
- DE-A- 10 101 488
- US-A- 5 441 457
- US-A- 5 702 317
- US-A1- 2003 139 235

## Description

### BACKGROUND OF THE INVENTION

The present invention relates to oil tight type chain tensioners, according to the preamble of claim 1.

In an engine including a chain for transmitting rotation of a crankshaft to a camshaft, a tensioner is deployed for pressing the chain in order to apply a certain level of tension to the chain. The tensioner includes a housing retaining oil and accommodating a rod. The rod is projected from the housing by urging force of a spring, thus pressing the chain. If the chain vibrates in this state, the rod may be urged to be retracted into the housing. However, the oil in the housing restricts the movement of the rod, such that the rod is slowly retracted into the housing. This suppresses the vibration of the rod.

Conventionally, an oil fed type tensioner is employed for the aforementioned purpose. In this type of tensioner, an oil pump driven by the engine supplies oil to the interior of the housing of the tensioner. Meanwhile, the oil is allowed to leak from the housing, thus enabling the oil in the housing to apply a constant level of tension to the chain. If the rod is urged to be retracted into the housing by the vibration of the chain, the oil in the housing hampers the movement of the rod. The vibration of the rod is thus suppressed.

However, the oil fed type tensioner needs an oil feeding passage to be formed in, for example, a cylinder head of the engine. Since the oil feeding passage has a complex configuration, the passage is relatively complicated to form. Further, since the oil pump must feed the tensioner, the oil discharge amount of the oil pump becomes relatively large, thus increasing the load of the engine driving the oil pump. This makes it difficult to save fuel consumption of the engine.

Accordingly, an oil tight type tensioner has been proposed. This type of tensioner includes oil sealed in the housing. An oil seal is provided between the outer circumferential surface of the rod and the inner circumferential surface of the housing. Although this tensioner solves the aforementioned problem, the following problem is presented in terms of the pressing of the chain by the rod.

More specifically, the chain is normally received in a chain case and is supplied with engine oil, which is relatively hot, for lubricating the chain. Thus, the interior of the chain case is relatively hot due to the oil splashed by the chain. Since the tensioner is disposed in the chain case, the temperature of the oil in the housing of the tensioner is raised by the heat in the chain case. The volume of the oil is thus expanded, and the pressure in the housing rises. This, in turn, increase the force (tension) pressing the oil seal against the outer circumferential surface of the rod.

When the rod is projected from the housing, the rod is slid along the oil seal. If the aforementioned tension is increased, the friction between the oil seal and the rod is also increased, thus promoting wear of the oil seal. Since the tension acts non-uniformly in a circumferential direction of the rod due to inclination or radial displacement of the rod, the wearing amount of the oil seal becomes non-uniform in the circumferential direction of the rod. As a result, focal and excessive wear may occur at a circumferential section of the oil seal.

To solve this problem, a diaphragm may be deployed for defining an air chamber in the housing, which is isolated from the oil, as described in Japanese Laid-open Patent Publication No. 2001-193806. In this structure, if the volume of the oil is expanded due to the heat in the chain case, the diaphragm receiving the pressure of the oil is deformed by the expansion. The air in the air chamber is thus compressed for reducing the volume of the air chamber, permitting the volume of the oil to be expanded. This prevents the pressure in the housing from becoming excessively high. The aforementioned problem, or the focal and excessive wear of the oil seal, is thus suppressed.

However, though the problem regarding the non-uniform wear of the oil seal is solved by the diaphragm, the diaphragm may be deteriorated due to the heat in the chain case. If the diaphragm is damaged due to the thermal deterioration, the oil in the housing may enter the air chamber, hampering the operation of the tensioner including pressing of the chain and suppressing of the chain vibration.

Further, document US 5,441,457 A discloses a tensioner having a reservoir cover plate, wherein oil from the reservoir formed in the tensioner housing passes through a check valve to a chamber behind a spring-urged plunger, which protrudes from the housing to maintain tension in a chain or belt. Instead of a press-fit cup for closing the opening of the reservoir, a flat or convex cover plate is fixed to the housing for closing the opening in the reservoir.

Moreover, the closest prior art document DE 43 40 487 A1 discloses an oil-operated tensioner for the timing chain of an internal combustion engine, wherein a plunger, slidable in a bag-shaped cylinder open at one end, divides the cylinder into a high pressure chamber on the side of the plunger opposite to the open end, and a low pressure chamber on the other side of the plunger. A seal at the open end surrounds a piston rod connected to the plunger. A check valve allows free flow of oil from the low pressure chamber to the high pressure chamber so that the plunger can move rapidly in the projecting direction. A restricted passage allows only slow flow of oil in the opposite direction to prevent rapid retracting movement of the plunger. An oil reservoir, formed as an integral part of a housing of the tensioner or by an outer housing surrounding the cylinder, has a passage in communication with the low pressure chamber and an opening for collecting oil from the oil mist within the engine and surrounding the tensioner. Working oil for the tensioner is replenished from the oil mist, and leakage of oil from the high pressure chamber is prevented even when the engine is shut down.

### SUMMARY OF THE INVENTION

Accordingly, it is an objective of the present invention to provide an improved oil tight type chain tensioner that is capable of preferably suppressing non-uniform wear of an oil seal.

To achieve the foregoing and other objectives and in accordance with the purpose of the present invention, the invention provides an oil tight type chain tensioner for applying tension to a chain having the features of claim 1.

The present invention also provides an oil tight type chain tensioner for applying tension to a chain. The tensioner includes a housing, in which oil is sealed, and a reciprocating rod extending from the interior of the housing to the exterior for pressing the chain. The rod includes an outer circumferential surface, and the housing includes an inner circumferential surface surrounding the outer circumferential surface of the rod. An oil seal is located between the outer circumferential surface of the rod and the inner circumferential surface of the housing for preventing the oil from leaking from the space between the rod and the housing to the exterior of the housing. The rod is reciprocated as sliding against the oil seal. At least a portion of the outer circumferential surface of the rod corresponding to the oil seal has a relatively low surface roughness, as compared to the remaining portion of the outer circumferential surface of the rod.

The present invention further provides an oil tight type chain tensioner for applying tension to a chain. The tensioner includes a housing, in which oil is sealed, and a reciprocating rod extending from the interior of the housing to the exterior for pressing the chain. The rod includes an outer circumferential surface, and the housing includes an inner circumferential surface surrounding the outer circumferential surface of the rod. An oil seal is located between the outer circumferential surface of the rod and the inner circumferential surface of the housing for preventing the oil from leaking from the space between the rod and the housing to the exterior of the housing. The rod is reciprocated as sliding against the oil seal. At least a portion of the outer circumferential surface of the rod corresponding to the oil seal is plated with hard chrome, the hard chrome being finished through grinding.

In addition, the present invention provides an oil tight type chain tensioner for applying tension to a chain. The tensioner includes a housing, in which oil is sealed, and a reciprocating rod extending from the interior of the housing to the exterior for pressing the chain. The rod includes an outer circumferential surface, and the housing includes an inner circumferential surface surrounding the outer circumferential surface of the rod. An oil seal is located between the outer circumferential surface of the rod and the inner circumferential surface of the housing for preventing the oil from leaking from the space between the rod and the housing to the exterior of the housing. A plurality of rod guides are arranged between the outer circumferential surface of the rod and the inner circumferential surface of the housing for guiding the reciprocation of the rod. The rod guides are aligned in the axial direction of the rod.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional view showing an oil tight type chain tensioner according to an embodiment of the present invention;
Fig. 2 is an enlarged cross-sectional view showing a hole defined in an outer wall of a reservoir of the tensioner of Fig. 1;
Fig. 3 is a schematic view explaining machining of an outer circumferential surface of a rod for lowering surface roughness;
Fig. 4 is an enlarged cross-sectional view showing a modification of the hole of Fig. 2;
Fig. 5 is an enlarged cross-sectional view showing another modification of the hole of Fig. 2;
Fig. 6 is an enlarged cross-sectional view showing another modification of the hole of Fig. 2;
Fig. 7 is an enlarged cross-sectional view showing another modification of the hole of Fig. 2; and
Fig. 8 is an enlarged cross-sectional view showing another modification of the hole of Fig. 2.

### DETAILED DESCRIPTION OF THE PREFERRED EMBODIMENTS

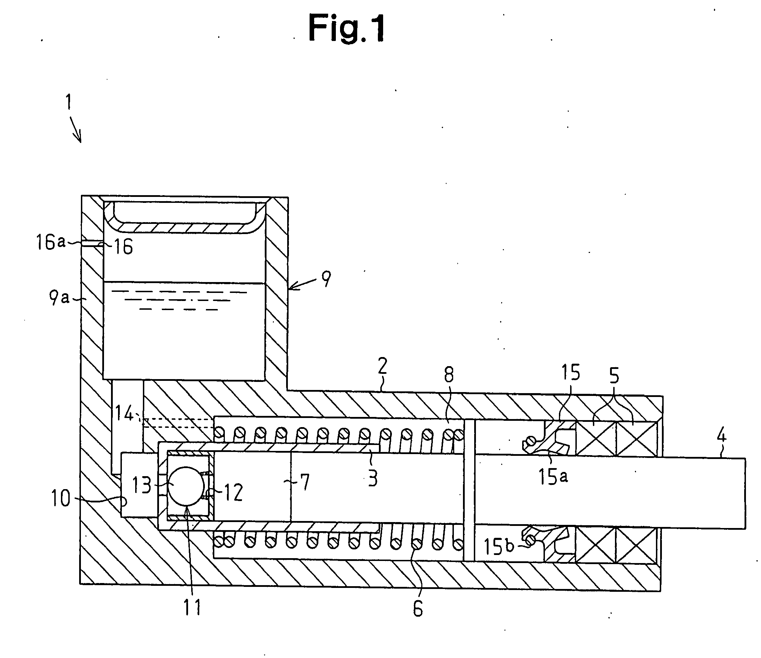

An embodiment of the present invention will hereafter be described with reference to Figs. 1 to 3.

Fig. 1 is a cross-sectional view showing the interior structure of an oil tight type chain tensioner 1 according to the embodiment of the present invention. The tensioner 1 is employed for a chain transmitting rotation of an engine crankshaft to a camshaft. The tensioner 1 is accommodated in a chain case receiving the chain. Engine oil is supplied to the interior of the chain case for lubricating the chain. When revolving in the chain case, the chain splashes the engine oil, which is relatively hot, exposing the interior of the chain case to the heat of the engine oil.

The tensioner 1 includes a housing 2 in which a cylinder 3 is accommodated. A rod 4 is received in the cylinder 3 such that the rod 4 is reciprocally movable. A pair of annular rod guides 5 are deployed between the inner circumferential surface of the housing 2 and the outer circumferential surface of the rod 4. The rod guides 5 guide the rod 4 when the rod 4 moves. The inner diameter of each of the rod guides 5 is substantially equal to the outer diameter of the rod 4. The outer circumferential surface of the rod 4 is slidably supported by the inner wall of each rod guide 5. The housing 2 also accommodates a coil spring 6 for urging the rod 4 in a projecting direction from the housing 2. When the rod 4 is projected from the housing 2 by the urging force of the coil spring 6, the chain is pressed by the rod 4 when revolving in the chain case. In this manner, a constant level of tension acts on the chain. The tensioner 1 is arranged in the chain case such that the rod 4 is reciprocated horizontally in the chain case.

When pressing the chain, the rod 4 may be urged in a direction to be retracted into the housing 2 by, for example, vibration of the chain. The chain vibration can be suppressed by restricting the movement of the rod 4 urged to be retracted into the housing 2. Specifically, the tensioner 2 has oil sealed in the housing 2 for restricting such movement of the rod 4 by means of the oil flow.

The structure for restricting the retracting movement of the rod 4 will now be explained.

In the housing 2, a high pressure chamber 7 and a low pressure chamber 8 are defined by the cylinder 3 and the rod 4. The high pressure chamber 7 and the low pressure chamber 8 are filled with the oil sealed in the housing 2. An annular oil seal is disposed between the inner circumferential surface of the housing 2 and the outer circumferential surface of the rod 4 at a position relatively close to the retracted end of the rod 4 with respect to the rod guides 5. This structure prevents the oil from leaking through the space between the inner circumferential surface of the housing 2 and the outer circumferential surface of the rod 4 to the exterior of the housing 2. The outer periphery of the oil seal 15 is secured to the inner circumferential surface of the housing 2. A lip 15a is formed at an inner peripheral portion of the oil seal 15 for contacting the outer circumferential surface of the rod 4. An elastic, annular holding spring 15b presses the lip 15a against the outer circumferential surface of the rod 4. Thus, when the rod 4 is projected from or retracted into the housing 2, the outer circumferential surface of the rod 4 is slid along the lip 15a of the oil seal 15.

Since the movement of the rod 4 changes the volume of the high pressure chamber 7 in the cylinder 3, the amount of the oil retained in the housing 2 is varied in correspondence with the retracting amount of the rod 4 with respect to the housing 2. In order to maintain the housing 2 in an oil filled state regardless of the variation of the oil amount, the tensioner 1 includes a reservoir 9 for sending oil to the housing 2 in correspondence with the amount of the oil retained in the housing 2. The reservoir 9 is connected to the high pressure chamber 7 in the housing 2 through a passage 10. A check valve 11 is formed in the high pressure chamber 7 for permitting the oil to flow from the passage 10 to the high pressure chamber 7 and preventing the oil from being returned from the high pressure chamber 7 to the passage 10. In the check valve 11, a check ball 13 is held at a position blocking the high pressure chamber 7 from the passage 10, by the force of a spring 12. When the rod 4 is projected from the housing 2 and the volume of the high pressure chamber 7 is increased, the check ball 13 is moved to a position connecting the high pressure chamber 7 to the passage 10 due to the pressure difference between the high pressure chamber 7 and the passage 10.

In this state, the oil in the reservoir 9 is introduced to the high pressure chamber 7 through the passage 10, enabling the rod 4 to be projected quickly. Thus, when the chain is extended, the rod 4 is allowed to be projected toward the chain with quick response, such that the tension of the chain is reliably maintained at the constant level.

In contrast, when the rod 4 is retracted into the housing 2 due to vibration of the chain or the like such that the volume of the high pressure chamber 7 is reduced, the check valve 11 blocks the high pressure chamber 7 from the passage 10. In this state, the oil in the high pressure chamber 7 leaks to the low pressure chamber 8 through-the space between the outer circumferential surface of the rod 4 and the inner circumferential surface of the cylinder 3. Since the low pressure chamber 8 is connected to the reservoir 9 (precisely, the passage 10) through a discharge passage 14, the oil leaked from the high pressure chamber 7 to the low pressure chamber 8 is discharged to the reservoir 9 through the discharge passage 14. Further, since the space between the outer circumferential surface of the rod 4 and the inner circumferential surface of the cylinder 3 is relatively small, the oil leakage from the high pressure chamber 7 to the low pressure chamber 8 occurs only slowly. This restricts the movement of the rod 4 urged to be retracted into the housing 2, thus suppressing the vibration of the chain.

As described above, the tensioner 1 is deployed in the chain case in which relatively hot oil is dispersed. The oil in the housing 2 is thus heated by the heat in the chain case, leading to volume expansion of the oil. This raises the pressure in the housing 2 (the low pressure chamber 8), thus increasing the force (tension) acting to press the lip 15a of the oil seal 15 against the outer circumferential surface of the rod 4. The friction between the lip 15a of the oil seal 15 and the outer circumferential surface of the rod 4 thus becomes relatively large, when the rod 4 is projected or retracted. This promotes wear of the lip 15a.

As has been described, the tension acts non-uniformly along the rod 4 in the circumferential direction due to inclination or radial displacement of the rod 4. Particularly if the tensioner 1 is arranged such that the rod 4 is reciprocated horizontally, the gravity caused by the rod 4 acts focally on a section of the lip 15a located downward with respect to the rod 4. This promotes the non-uniform tension acting on the rod 4 in the circumferential direction. Therefore, when the tension increases and causes the wear of the lip 15a, the wear amount of the lip 15a also becomes non-uniform in the circumferential direction of the rod 4. That is, focal and excessive wear may occur at a circumferential section of the lip 15a.

To solve this problem, the illustrated embodiment includes three solutions, which are [A] suppressing pressure rise in the housing, [B] reducing the friction between the rod 4 and the oil seal 15, and [C] suppressing the radial displacement of the rod 4. Each of the solutions [A] to [C] will be specified in the following.

### [A] Suppressing pressure rise in the housing

When the oil in the housing 2 is heated and expended, some of the oil escapes to the reservoir 9 through the discharge passage 14, compressing the air in the reservoir 9. The compressed air is escaped to the exterior of the reservoir 9 through a hole 16 formed in an outer wall 9a of the reservoir 9. In this manner, the volume of the oil in the housing 3 is allowed to be thermally expanded without causing an excessive pressure rise in the housing 2. This suppresses the focal and excessive wear of the circumferential portion of the lip 15a of the oil seal 15, which is otherwise caused by the excessive pressure rise in the housing 2 (the low pressure chamber 8).

However, the used, lubricant oil (the engine oil) dispersed in the chain case may be introduced into the reservoir 9 through the hole 16, which extends through the outer wall 9a of the reservoir 9. This structure allows the lubricant oil to enter the housing 2 when the rod 4 is moved and oil flows between the reservoir 9 and the housing 2. The lubricant oil entering the housing 2 is mixed with the oil in the housing 2, affecting the operation of the tensioner 1 disadvantageously.

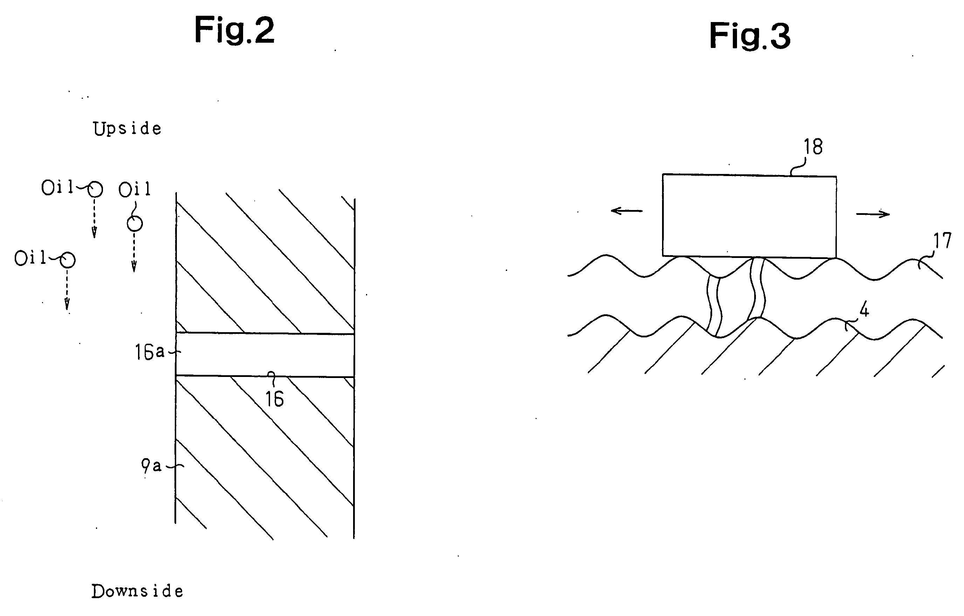

With reference to Fig. 2, the lubricant oil dispersed in the chain case mostly flows from upside to downside. Therefore, in the illustrated embodiment, an outer opening 16a of the hole 16 is oriented in a direction hampering the entrance of the lubricant oil into the reservoir 9, for example, in a horizontal direction (leftward in the drawing). This structure forms an air bleeding structure that enables air communication between the interior and exterior of the reservoir 9 and stops the lubricant oil from flowing from the exterior of the reservoir 9 to the interior. This prevents the lubricant oil from being mixed with the oil in the housing 2 and thus affecting the operation of the tensioner 1 disadvantageously.

### [B] Reducing the friction between the rod and the oil seal

When the pressure in the housing 2 is increased, the tension acting to press the lip 15a of the oil seal 15 against the outer circumferential surface of the rod 4 is increased. This increases the friction between the lip 15a of the oil seal 15 and the outer circumferential surface of the rod 4, causing focal excessive wear of a circumferential portion of the lip 15a. Therefore, for maintaining such friction at a relatively low level, at least a section of the outer circumferential surface of the rod 4 corresponding to the lip 15a, along which the lip 15a is slid when the rod 4 is moved, is machined to lower surface roughness. More specifically, at least the section of the outer circumferential surface of the rod 4 corresponding to the lip 15a is subjected to hard chrome plating, thus forming a plating film 17, as illustrated in Fig. 3. The plating film 17 is then finished using a grinder 18 such that the surface of the plating film 17 becomes smooth. Accordingly, the surface roughness of the section of the rod 4 becomes relatively low, as compared to the remainder of the rod 4, which is not subjected to the machining. The friction between the lip 15a of the oil seal 15 and the outer circumferential surface of the rod 4 is thus prevented from becoming relatively large. As a result, the focal excessive wear of a circumferential portion of the lip 15a is suppressed.

### [C] Suppressing the radial displacement of the rod

The non-uniform wear of the lip 15a in the circumferential direction is brought about by the inclination or radial displacement of the rod 4 at the position corresponding to the lip 15a. Therefore, for suppressing such inclination and displacement of the rod 4, a plurality of (in this embodiment, two) adjacent rod guides 5 are arranged parallel in the axial direction of the rod 4, with reference to Fig. 1. The rod guides 5 slidably support the outer circumferential surface of the rod 4 and thus guide the reciprocation of the rod 4. This structure suppresses the radial displacement of the rod 4 at the position corresponding to the lip 15a, preventing the non-uniform wear of the lip 15a in the circumferential direction. In other words, the focal excessive wear of a circumferential portion of the lip 15a is suppressed.

Further, a portion of the rod 4 relatively close to the projecting end of the rod 4 is located relatively close to the portion of the chain pressed by the rod 4. The external force acting on the rod 4 in the radial direction thus becomes larger gradually toward the projecting end of the rod 4. This promotes the inclination or radial displacement of the rod 4 at the position relatively close to the projecting end of the rod 4. Therefore, the rod guides 5 are deployed relatively close to the projecting end of the rod 4, with respect to the oil seal 15. In other words, as compared to the oil seal 15, the positions of the rod guides 5 are relatively close to the exterior of the housing 2 in the axial direction of the rod 4. In this arrangement, the rod guides 5 hold the rod 4 in the radial direction at the position relatively close to the projecting end of the rod 4, with respect to the section of the rod 4 corresponding to the oil seal 15. This structure further suppresses the inclination or radial displacement of the rod 4 at the position corresponding to the oil seal 15. The focal excessive wear of a circumferential portion of the lip 15a of the oil seal 15 is thus further reliably suppressed.

The illustrated embodiment has the following effects.
(1) Since the tensioner 1 includes the solutions [A] to [C], the focal excessive wear of a circumferential portion of the lip 15a of the oil seal 15 is suppressed, without causing the conventional problem, or the thermal deterioration of the diaphragm.
(2) As described about the solution [A], the outer opening 16a of the hole 16 extending through the wall of the reservoir 9 is oriented in the horizontal direction for preventing the communication of the used lubricant oil (engine oil), which flows from upside to downside in the chain case, between the reservoir 9 and the chain case. This configuration forms the air bleeding structure that permits the air communication from the interior to the exterior of the reservoir 9 through the hole 16 but restricts the flow of the used oil from the exterior to the interior of the reservoir 9 through the hole 16. The used oil is thus stopped from entering the reservoir 9 and then flowing to the housing 2 when the rod 4 is moved. This prevents the operation of the tensioner 1 from being disadvantageously affected by the used oil, which is otherwise mixed with the oil in the housing 2.
(3) In accordance with the solution [C], the rod guides 5 restricting the inclination or radial displacement of the rod 4 are arranged relatively close to the projecting end of the rod 4 with respect to the oil seal 15. As has been described, the inclination or radial displacement of the rod 4 is promoted at the portion of the rod 4 relatively close to the projecting end of the rod 4. Thus, the arrangement of the rod guides 5 further suppresses the radial displacement of rod 4 at the position corresponding to the lip 15a of the oil seal 15. In other words, the focal excessive wear of a circumferential portion of the lip 15a of the oil seal 15, caused by the radial displacement of the rod 4, is further reliably suppressed.
(4) The tensioner 1 is disposed such that the rod 4 is reciprocated horizontally. Therefore, in the tensioner 1, the oil in the housing 2 is located in the vicinity of the oil seal 15 and, as above-described, focal wear of the lip 15a is likely to occur. The oil thus may leak from the space between the inner circumferential surface of the housing 2 and the outer circumferential surface of the rod 4. However, this problem is suppressed preferably by the illustrated embodiment.

The illustrated embodiment may be modified as follows.

Although the rod 4 is reciprocated horizontally in the tensioner 1 of the illustrated embodiment, the present invention may be applied to a tensioner in which a rod is reciprocated vertically.

Although the illustrated embodiment includes the solutions [A] to [C], only one or two of the solutions [A] to [C] may be provided.

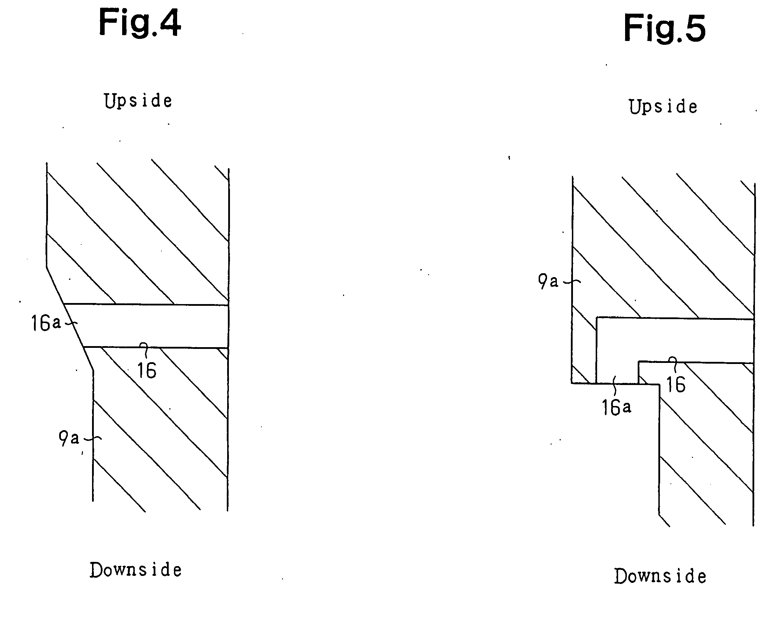

As described about the solution [A], the outer opening 16a of the hole 16 is oriented in the horizontal direction. However, the outer opening 16a of the hole 16 may be faced downward with respect to the horizontal direction, with reference to Figs. 4 and 5, for example. Further, in order to prevent the used oil from entering the hole 16 from the chain case, it is preferred that the opening 16a of the hole 16 is faced vertically downward, as illustrated in Fig. 5.

In accordance with the solution [A], the aforementioned air bleeding structure is formed by selecting the direction along which the opening 16a of the hole 16 is faced. However, the air bleeding structure may be formed by setting the inner diameter of the hole 16. For example, the inner diameter of at least one portion of the hole 16 in the extending direction may be reduced sufficiently for prohibiting the used oil from passing through the hole 16. This also forms the air bleeding structure that restricts the flow of the used oil from the exterior to the interior of the reservoir 9. The hole 16 having the portion with the reduced inner diameter may be originally defined in the outer wall 9a of the reservoir 9. Alternatively, after defining the hole 16 having a constant inner diameter, an insert with a hole having a portion with a reduced diameter may be fitted in the hole 16. The insert may be formed of air permeable material such as a body of crossed metal fibers with a density prohibiting the oil from passing through the fibers or a foam body of urethane resin having continuous foams.

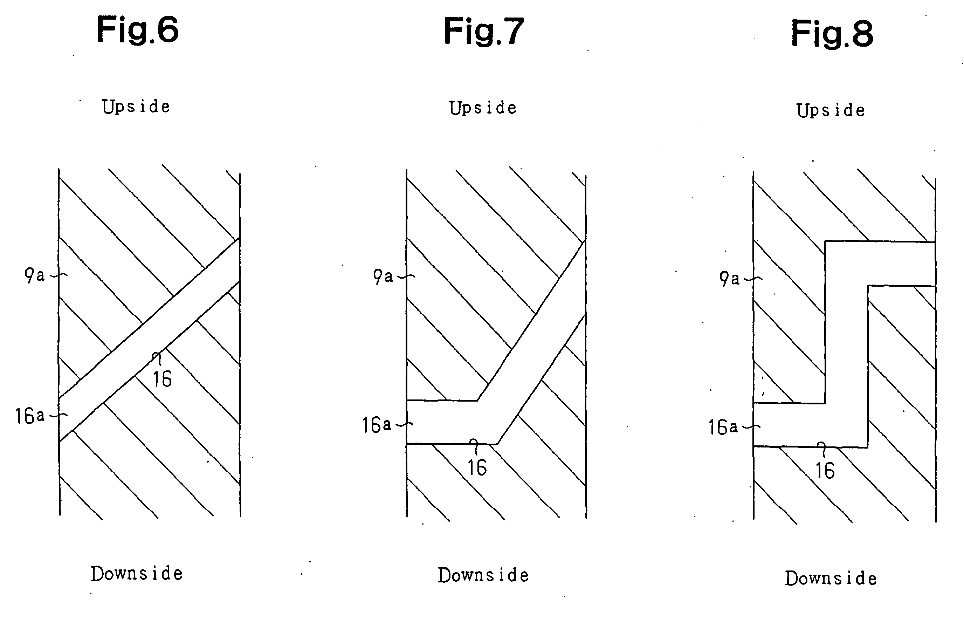

Regarding the solution [A], the air bleeding structure may be formed by selecting the extending direction of the hole 16. For example, with reference to Figs. 6 to 8, at least one portion of the hole 16 may extend upward from the exterior of the reservoir 9 to the interior. This structure forms the air bleeding structure that prevents the used oil from flowing from the exterior to the interior of the reservoir 9. Specifically, in order to prevent the used oil from entering the hole 16 from the chain case, it is preferred that a portion of the hole 16 extends vertically upward, as illustrated in Fig. 8.

Instead of varying the extending direction of the hole 16 for forming the air bleeding structure as above-described, a plurality of portions of the hole 16 in the extending direction may be bent such that the used oil does not enter the interior of the reservoir 9 from the exterior. This also forms the aforementioned air bleeding structure. More specifically, one portion of the hole 16 extends upwardly as illustrated in Fig. 8 and two portions of the hole 16 located upstream and downstream from the upwardly extending portion of the hole 16 are defined in a manner bent at 90 degrees. The bleeding air structure is thus formed. Alternatively, instead of bending the hole 16 in a vertical plane as shown in Fig. 8, a plurality of portions of the hole 16 may be bent in a horizontal plane for forming the air bleeding structure.

Rather than the air bleeding structure of the solution [A], a passage may be formed in the reservoir 9 for connecting the interior of the reservoir 9 to the exterior. The opening of the passage facing the exterior of the reservoir 9 is connected to a separate water tank. The air flowing in the passage is thus passed through the water in the water tank before being discharged to the exterior. This structure forms the air bleeding structure that restricts the entrance of the used oil from the exterior of the reservoir 9 to the interior. If the used oil flows to the water tank, the oil does not reach the opening of the passage located at a position corresponding to the water in the tank. The oil is thus reliably prevented from entering the reservoir 9.

In the solution [B], only the section of the outer circumferential surface of the rod 4 corresponding to the lip 15a of the oil seal 15 is subjected to the machining for decreasing the surface roughness, such as the hard chrome plating and grinding. However, the entire outer circumferential surface of the rod 4 may be subjected to the machining. In other words, if only the section of the outer circumferential surface of the rod 4 is machined, the surface roughness of the section becomes relatively low, as compared to that of the remainder of the outer circumferential surface of the rod 4. If the entire outer circumferential surface of the rod 4 is machined, the roughness of the outer circumferential surface of the rod 4 becomes relatively low, as compared to the remaining portion of the tensioner 1 other than the rod 4.

As explained about the solution [C], the illustrated embodiment includes the two rod guides 5. However, three or more rod guides 5 may be provided.

Further, each of the rod guides 5 in the solution [C] is located relatively close to the projected end of the rod 4 with respect to the oil seal 15. Alternatively, each rod guide 5 may be disposed relatively close to the retracted end of the rod 4 with respect to the oil seal 15.

In addition, the rod guides 5 may be located along the axial direction of the rod 4 with a predetermined clearance defined between adjacent ones of the rod guides 5.

The present examples and embodiments are to be considered as illustrative and not restrictive and the invention is not to be limited to the details given herein, but may be modified within the scope and equivalence of the appended claims.

## Claims

1. An oil tight type chain tensioner (1) for applying tension to a chain, comprising:
a housing (2), in which oil is sealed;
a reciprocating rod (4) extending from the interior of the housing (2) to the exterior for pressing the chain, the rod (4) including an outer circumferential surface, the housing (2) including an inner circumferential surface surrounding the outer circumferential surface of the rod (4);
an oil seal (15) located between the outer circumferential surface of the rod (4) and the inner circumferential surface of the housing (2) for preventing the oil from leaking from the space between the rod (4) and the housing (2) to the exterior of the housing (2); and
a reservoir (9) for retaining the oil, the reservoir (9) being communicated with the interior of the housing (2) for allowing the oil to flow between the interior of the housing (2) and the reservoir (9) in correspondence with the reciprocation of the rod (4), wherein the reservoir (9) has a hole (16) connecting the interior of the reservoir (9) to the exterior, the hole (16) having an opening (16a) to the exterior of the reservoir (9), the tensioner (1) being **characterized in that:**
the opening (16a) of the hole (16) is oriented in a direction downward with respect to the horizontal direction for permitting air communication from the interior of the reservoir (9) to the exterior but restricting an oil flow from the exterior of the reservoir (9) to the interior.

2. The tensioner (1) according to Claim 1, **characterized in that** the hole (16) is defined such that at least a portion of the hole (16) extends upwardly from the exterior of the reservoir (9) to the interior.

3. The tensioner (1) according to Claim 1, **characterized in that** the hole (16) is bent.

4. The tensioner (1) according to Claim 1, **characterized in that** a plurality of portions of the hole (16) are bent.

5. The tensioner (1) according to any one of Claims 1 to 4, **characterized in that** at least a portion of the outer circumferential surface of the rod (4) corresponding to the oil seal (15) has a relatively low surface roughness, as compared to the remaining portion of the outer circumferential surface of the rod (4).

6. The tensioner (1) according to any one of Claims 1 to 5, **characterized in that** at least a portion of the outer circumferential surface of the rod (4) corresponding to the oil seal (15) is plated with hard chrome, the hard chrome being finished through grinding.

7. The tensioner (1) according to any one of Claims 1 to 6 **characterized by** a plurality of rod guides (5) arranged between the outer circumferential surface of the rod (4) and the inner circumferential surface of the housing (2) for guiding the reciprocation of the rod (4), the rod guides (5) being aligned in the axial direction of the rod (4).

8. The tensioner (1) according to Claim 7, **characterized in that** the rod guides (5) are located relatively close to the exterior of the housing (2) in the axial direction of the rod (4), as compared to the oil seal (15).

9. The tensioner (1) according to any one of Claims 1 to 8, **characterized in that** the rod (5) is reciprocated in a substantially horizontal direction.

## Patentansprüche

1. Kettenspannvorrichtung (1) des öldichten Typs, um Spannung auf eine Kette aufzubringen, aufweisend:
ein Gehäuse (2), in dem Öl abgedichtet ist;
eine sich hin- und herbewegende Kolbenstange (4), die sich vom Inneren des Gehäuses (2) zum Äußeren erstreckt, um auf die Kette zu drücken, wobei die Stange (4) eine äußere Umfangsoberfläche umfaßt, wobei das Gehäuse (2) eine innere Umfangsoberfläche umfaßt, welche die äußere Umfangsoberfläche der Stange (4) umgibt;
eine Ölabdichtung (15), die zwischen der äußeren Umfangsoberfläche der Stange (4) und der inneren Umfangsoberfläche des Gehäuses (2) angeordnet ist, um das Öl zu hindern, durch die Lücke zwischen der Stange (4) und dem Gehäuse (2) zum Äußeren des Gehäuses auszufließen; und
einen Behälter (9), um das Öl zurückzuhalten, wobei der Behälter mit dem Inneren des Gehäuses (2) verbunden ist, damit das Öl zwischen dem Inneren des Gehäuses (2) und dem Behälter (9) entsprechend der Hin- und Herbewegung der Stange (4) fließen kann, wobei der Behälter (19) ein Loch (16) aufweist, welches das Innere des Behälters (9) mit dem Äußeren verbindet, wobei das Loch (16) eine Öffnung (16a) zum Äußeren des Behälters (9) aufweist,
wobei die Spannvorrichtung (1) **dadurch gekennzeichnet ist, daß**:
die Öffnung (16a) der Lücke (16) in Bezug auf die horizontale Richtung nach unten ausgerichtet ist, um einen Luftaustausch vom Inneren zum Äußeren des Behälters (9) zu ermöglichen, wobei aber der Ölfluß vom Äußeren zum Inneren des Behälters eingeschränkt wird.

2. Spannvorrichtung (1) nach Anspruch 1, **dadurch gekennzeichnet, daß** das Loch (16) so eingerichtet ist, daß sich zumindest ein Teilbereich des Lochs (16) aufwärts vom Äußeren zum Inneren des Behälters (9) erstreckt.

3. Spannvorrichtung (1) nach Anspruch 1, **dadurch gekennzeichnet, daß** das Loch (16) gebogen ist.

4. Spannvorrichtung (1) nach Anspruch 1, **dadurch gekennzeichnet, daß** eine Mehrzahl der Teilbereiche des Lochs (16) gebogen sind.

5. Spannvorrichtung (1) nach einem der Ansprüche 1 bis 4, **dadurch gekennzeichnet, daß** wenigstens ein Teil der äußeren Umfangsoberfläche der Stange (4), der zu der Ölabdichtung gehört, verglichen mit dem übrigen Teil der äußeren Umfangsoberfläche der Stange (4) eine relativ niedrige Oberflächenrauheit hat.

6. Spannvorrichtung (1) nach einem der Ansprüche 1 bis 5, **dadurch gekennzeichnet, daß** wenigstens ein Teil der äußeren Umfangsoberfläche der Stange (4) mit hartem Chrom beschichtet ist, wobei das harte Chrom durch Schleifen feinbearbeitet wird.

7. Spannvorrichtung (1) nach einem der Ansprüche 1 bis 6, **gekennzeichnet durch** eine Mehrzahl von Stangenfiihrungen (5), die zwischen der äußeren Umfangsoberfläche der Stange (4) und der inneren Umfangsoberfläche des Gehäuses (2) angeordnet sind, um die Hin- und Herbewegung der Stange (4) zu führen, wobei die Stangenführungen (5) in Achsrichtung zur Stange (4) in Reihe ausgerichtet sind.

8. Spannvorrichtung (1) nach Anspruch 7, **dadurch gekennzeichnet, daß** die Stangenführungen (5) verglichen mit der Ölabdichtung (15) relativ nah zum Äußeren des Gehäuses (2) in Achsrichtung der Stange (4) angeordnet sind.

9. Spannvorrichtung (1) nach einem der Ansprüche 1 bis 8, **dadurch gekennzeichnet, daß** die Stange in eine im wesentlichen horizontale Richtung hin- und herbewegt wird.

## Revendications

1. Tendeur de chaîne hydraulique (1) pour appliquer une tension à une chaîne, comprenant :
un logement (2), dans lequel de l'huile est scellée ;
une tige en mouvement de va et vient (4) s'étendant depuis l'intérieur du logement (2) jusqu'à l'extérieur pour presser la chaîne, la tige (4) incluant une surface circonférentielle extérieure, le logement (2) incluant une surface circonférentielle intérieure entourant la surface circonférentielle extérieure de la tige (4) ;
un joint d'huile (15) situé entre la surface circonférentielle extérieure de la tige (4) et la surface circonférentielle intérieure du logement (2) pour empêcher l'huile de fuir de l'espace entre la tige (4) et le logement (2) vers l'extérieur du logement (2) ; et
un réservoir (9) pour retenir l'huile, le réservoir (9) étant mis en communication avec l'intérieur du logement (2) afin de permettre à l'huile de s'écouler entre l'intérieur du logement (2) et le réservoir (9) en correspondance avec le mouvement de va et vient de la tige (4), dans lequel le réservoir (9) a un trou (16) reliant l'intérieur du réservoir (9) à l'extérieur, le trou (16) ayant une ouverture (16a) vers l'extérieur du réservoir (9), le tendeur (1) étant **caractérisé en ce que** :
l'ouverture (16a) du trou (16) est orientée dans une direction vers le bas par rapport à la direction horizontale pour permettre une communication d'air depuis l'intérieur du réservoir (9) vers l'extérieur mais limitant un écoulement d'huile depuis l'extérieur du réservoir (9) vers l'intérieur.

2. Tendeur (1) selon la revendication 1, **caractérisé en ce que** le trou (16) est défini de sorte qu'au moins une portion du trou (16) s'étende vers le haut depuis l'extérieur du réservoir (9) vers l'intérieur.

3. Tendeur (1) selon la revendication 1, **caractérisé en ce que** le trou (16) est coudé.

4. Tendeur (1) selon la revendication 1, **caractérisé en ce qu'**une pluralité de portions du trou (16) sont coudées.

5. Tendeur (1) selon l'une quelconque des revendications 1 à 4, **caractérisé en ce qu'**au moins une portion de la surface circonférentielle extérieure de la tige (4) correspondant au joint d'huile (15) a une rugosité de surface relativement basse, en comparaison à la portion restante de la surface circonférentielle extérieure de la tige (4).

6. Tendeur (1) selon l'une quelconque des revendications 1 à 5, **caractérisé en ce qu'**au moins une portion de la surface circonférentielle extérieure de la tige (4) correspondant au joint d'huile (15) est plaquée avec du chrome dur, le chrome dur étant fini par le biais d'une rectification.

7. Tendeur (1) selon l'une quelconque des revendications 1 à 6 **caractérisé par** une pluralité de guides de tige (5) agencés entre la surface circonférentielle extérieure de la tige (4) et la surface circonférentielle intérieure du logement (2) afin de guider le mouvement de va et vient de la tige (4), les guides de tige (5) étant alignés dans la direction axiale de la tige (4).

8. Tendeur (1) selon la revendication 7, **caractérisé en ce que** les guides de tige (5) sont situés relativement proches de l'extérieur du logement (2) dans la direction axiale de la tige (4), en comparaison au joint d'huile (15).

9. Tendeur (1) selon l'une quelconque des revendications 1 à 8, **caractérisé en ce que** la tige (5) est mise en un mouvement de va et vient dans une direction substantiellement horizontale.
